Europäisches Patentamt

European Patent Office

Office européen des brevets

(11) Veröffentlichungsnummer: **0 297 598**
**A2**

(12) **EUROPÄISCHE PATENTANMELDUNG**

(21) Anmeldenummer: 88110532.4

(22) Anmeldetag: 01.07.88

(51) Int. Cl.4: **A01N 63/00 , A01N 37/44 , A23L 3/34**

Patentansprüche für folgenden Vertragsstaaten:
ES + GR.

(30) Priorität: 03.07.87 DE 3722044

(43) Veröffentlichungstag der Anmeldung:
04.01.89 Patentblatt 89/01

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Lotz, Andreas, Dr.
Coventrystrasse 6
D-6230 Frankfurt am Main 80(DE)
Erfinder: Wöhner, Gerhard, Dr.
Flörsheimer Strasse 27
D-6093 Flörsheim am Main 80(DE)
Erfinder: Klug, Christian, Dr.
Friedrich-Ebert-Strasse 15
D-6231 Schwalbach am Taunus(DE)

(54) **Mittel zur Inaktivierung von Sporen sowie Verfahren zur Verlängerung der Haltbarkeit von Produkten, Stoffen oder Erzeugnissen, die durch bakteriellen Sporenbefall verderblich sind.**

(57) Mittel zur Inaktivierung von Sporen sowie Verfahren zur Verlängerung der Haltbarkeit von Produkten, Stoffen oder Erzeugnissen, die durch bakteriellen Sporenbefall verderblich sind

Proteinogene Aminosäuren sowie ein Mittel bestehend aus einem oder mehreren Synergisten zusammen mit einem bakterienlysierenden Enzymprodukt können das Auskeimen von Mikroorganismensporen verhindern.

EP 0 297 598 A2

# Mittel zur Inaktivierung von Sporen sowie Verfahren zur Verlängerung der Haltbarkeit von Produkten, Stoffen oder Erzeugnissen, die durch bakteriellen Sporenbefall verderblich sind

Die Erfindung betrifft ein Mittel zur Inaktivierung von Sporen, die Verwendung dieses Mittels sowie ein Verfahren zur Verlängerung der Haltbarkeit von Produkten, Stoffen oder Erzeugnissen, die durch bakteriellen Sporenbefall verderblich sind. Das Mittel enthält als aktive Komponenten entweder eine oder mehrere verschiedene Aminosäuren oder a) einen oder mehrere Synergisten und b) ein oder mehrere bakterienlysierende Enzymprodukte mit N-Acetylmuramidaseaktivität.

Bei der Lebensmittelkonservierung durch Temperatureinwirkung (Pasteurisation, Sterilisation) werden die in Lebensmitteln befindlichen vegetativen Mikroorganismen durch Einwirkung von Hitze abgetötet bzw. so weit geschädigt, daß sie unter den zu erwartenden Lagerungsbedingungen nicht mehr entwicklungsfähig sind. Es besteht aber bei der Konservierung durch Hitzebehandlung die Gefahr, daß gerade die Sporen verschiedener lebensmittelverderbender Mikroorganismen bei unzureichender Erhitzung nicht vernichtet werden und daß diese zu einem späteren Zeitpunkt auskeimen und somit indirekt für den Verderb der Lebensmittel verantwortlich sind. Andererseits führt eine hohe Thermisierung neben der vollständigen Abtötung von Sporen oft auch zu einer Beeinträchtigung der sensorischen und ernährungsphysiologischen Eigenschaften (z.B. Vitaminverlust) und ist zusätzlich - auf Grund des hohen Energieverbrauchs - sehr kostenintensiv.

Endosporen, die von sogenannten Endosporenbildnern, wie Bacillus spezies, insbesondere B. cereus, B. licheniformis B. subtilis, B. coagulans, B. stearothermophilus oder Clostridien spezies, insbesondere C. sporogenes, C. pasteurianum, C. botulinum oder C. perfringens gebildet werden, können beispielsweise für die Süßgerinnung von Milch (Bacillus cereus ab einer Keimzahl von $10^7$/ml Milch) oder für den Verderb fleischhaltiger Produkte (z.B. Clostridium sporogenes) verantwortlich sein.

Bakterienlysierende Enzymprodukte mit N-Acetylmuramidaseaktivität, wie z.B. Lysozym, Können zur Konservierung von Lebensmitteln, z.B. Käse-, Fleisch- und Fischprodukten eingesetzt werden. In der französischen Patentschrift 80 03 321 wird der Einsatz von lysozymartigen Produkten aus Sekreten von Tieren und Pflanzen zur Verhinderung der Spähtblähung in verschiedenen Käsesorten dargestellt.

Ebenso wurde bereits vorgeschlagen (deutsche Patentanmeldung P 37 04 004.9) nicht-enzymatische Konservierungsstoffe mit bakterienlysierenden Enzymprodukten welche N-Acetylmuramidaseaktivität zeigen, zu kombinieren, wobei sich ein Wirkungsynergismus ergibt, der zu einer Verlängerung der Haltbarkeit führt.

Es wurde nun überraschend gefunden, daß sowohl eine oder mehrere Aminosäuren als auch die Kombination von einem oder mehreren Synergisten mit einem oder mehreren bakterienlysierenden Enzymprodukten, welche N-Acetylmuramidaseaktivität besitzen, ausgezeichnete Mittel sind, um Sporen zu inaktivieren.

Die Erfindung betrifft somit:

1. Ein Mittel zur Inaktivierung von Sporen, das dadurch gekennzeichnet ist, daß das Mittel als aktive Komponenten entweder

a) eine oder mehrere verschiedene Aminosäuren oder

b) einen oder mehrere Synergisten zusammen mit einem oder mehreren bakterienlysierenden Enzymprodukten mit N-Acetylmuramidaseaktivität

enthält.

2. Die Verwendung des unter 1. charakterisierten Mittels als Konservierungsmittel.

3. Ein Verfahren zur Verlängerung der Haltbarkeit von Produkten, Stoffen oder Erzeugnissen, die durch bakteriellen Sporenbefall verderblich sind, das dadurch gekennzeichnet ist, daß den Produkten, Stoffen oder Erzeugnissen, die durch bakteriellen Sporenbefall verderblich sind ein Mittel zur Inaktivierung von Sporen wie unter 1. charakterisiert, zugegeben wird.

Im folgenden wird die Erfindung, insbesondere in ihren bevorzugten Ausführungsformen, detailliert beschrieben und in den Patentansprüchen definiert.

Unter aktiven Komponenten werden die Stoffe verstanden, die für die eigentliche Wirkung des Mittels verantwortlich sind. Erfindungsgemäß kann das Mittel oder auch ein oder mehrere Bestandteile des Mittels beispielsweise mit Lösungsmitteln wie Wasser, Pufferlösungen wie Carbonate, Emulgatoren wie Mono- oder Diglyceride, inaktiven Trägerstoffen wie Hydrokolloide, beispielsweise Stärke oder Gelatine, oder nichtwirkungsspezifischen Geschmackskorrigentien wie Gluconodeltalacton versetzt werden.

Als Aminosäuren können bevorzugt proteinogene Aminosäuren - also solche, die in Proteinen vorkommen - beispielsweise Cystein, Alanin, Tyrosin, insbesondere in ihrer L-Form, oder Glycin eingesetzt werden. Ebenso eignen sich ihre physiologisch verträglichen Salze.

Im Sinne der Erfindung werden unter Synergisten solche Stoffe verstanden, die, bis auf die nachfolgend genannten Aminosäuren, selbst keine bzw. nicht genügend konservierende Wirkung besitzen - also keine Konservierungsstoffe sind -, die jedoch Enzymprodukte mit N-Acetylmuramidaseaktivität zu unterstützen vermögen, wenn sie gemeinsam mit ihnen angewandt werden. Solche Synergisten sind beispielsweise Komplexbildner wie Zitronensäure oder Ethylendiamintetraacetat (EDTA), daneben aber auch Aminosäuren, insbesondere proteinogene wie Cystein, Alanin, Tyrosin, Glycin, die auch als Salze sowie insbesondere in ihrer L-Form eingesetzt werden können, oder Nucleoside und Nucleotide wie Inosin oder 5'-Inosinmonophosphat, die häufig als Geschmacksverstärker eingesetzt werden oder Phosphate wie Tetranatriumpyrophosphat (Diphosphat), Natriumtripolyphosphat (Triphosphat), Polyphosphat (Graham'sches Salz) oder Umrötungsmittel wie Alkalimetallnitrite, insbesondere Natriumnitrit und Alkalimetallnitrate wie Natrium- oder Kaliumnitrat.

Die zweite Komponente b) des Mittels ist mindestens ein bakterienlysierendes Enzymprodukt mit N-Acetylmuramidaseaktivität. Bevorzugt geeignete Enzyme sind beispielsweise pflanzlich, tierisch oder mikrobiell erzeugte Lysozyme, insbesondere aus Hühnereiweiß, oder aus Streptomyceten, insbesondere aus Streptomyces coelicolor DSM 3030 sowie dessen Mutanten oder Varianten (im folgenden Cellosyl genannt). Das Enzymprodukt aus DSM 3030 gewinnt man leicht nach dem in der deutschen Offenlegungsschrift 34 40 735 beschriebenen Verfahren. Danach wird Streptomyces coelicolor DSM 3030 in einem Fermentationsmedium unter Zusatz von Zuckerrübenmelasse in einer Menge von 5 bis 50 g, vorzugsweise 10 bis 20 g pro Liter Kulturmedium, kultiviert. Eine weitere Ausbeutesteigerung wird erreicht, wenn man dem Kulturmedium Calciumionen in Form leicht löslicher, ungiftiger Calciumsalze zusetzt, vorzugsweise in Form des preiswerten Calciumchlorids. Vorteilhaft ist eine 0,05 bis 1 molare Calciumionenkonzentration, insbesondere bevorzugt sind Konzentrationen von 100 bis 500 mmol, beispielsweise in Form eines Zusatzes von 0,2 bis 0,5 Gew.-% an Calciumchloriddihydrat.

Unter Inaktivierung von Sporen wird die Fähigkeit eines Stoffes, Mittels oder Verfahrens verstanden, die Auskeimung der Sporen in Produkten, Stoffen oder Erzeugnissen, die durch bakteriellen Sporenbefall verderblich sind, insbesondere während der Lagerung zu verhindern, zumindest jedoch zu verzögern.

Unter Sporen werden im Sinne der Erfindung Endosporen und Eposporen verstanden, insbesondere Enosporen, also jene der Bacillus spezies und Clostridium spezies.

Die Wirksubstanzen (entweder die Aminosäure(n) oder Synergist und Enzym) können gleichzeitig oder aufeinanderfolgend jedweden Produkten, Stoffen oder Erzeugnissen, die durch bakteriellen Sporenbefall verderblich sind, beispielsweise Lebensmitteln, wie z.B. Fleisch und Fleischerzeugnissen, fleischhaltigen Produkten und Fertiggerichten, Fisch-, Krusten-, Schalen- und Weichtiererzeugnissen, eßbaren gelatineartigen Überzugsmassen für Fleischerzeugnisse, Feinkosterzeugnissen, Flüssigei und flüssigem Eigelb, Gemüse- und Obsterzeugnissen, alkoholischen und alkoholfreien Getränken, Milch und Milcherzeugnissen, Füllungen für Teige und Backwaren, Zucker- und Süßwaren, sowie pharmazeutischen und kosmetischen Produkten, Futtermitteln, Tabak und Tabakerzeugnissen zugegeben werden.

Die Zusammensetzung des Mittels wird derart gewählt, daß die Konzentration des oder der bakterienlysierenden Enzymprodukte mit N-Acetylmuramidaseaktivität - bezogen auf die Masse des zu konservierenden Produktes - mindestens 0,001 Gew.-%, bevorzugt 0,01 Gew.-%, besonders bevorzugt 0,1 Gew.-% beträgt und höchstens 3 Gew.-%, bevorzugt 1,5 Gew.-%, besonders bevorzugt 1 Gew.-% beträgt. Näherungsweise entspricht ein 0,01 Gew.-%iger Enzymgehalt 2000 U/g Produkt.

Von den Synergisten werden bevorzugt die in der folgenden Tabelle 1 aufgeführten Stoffe eingesetzt. Diese können sowohl einzeln als auch in beliebigen Kombinationen eingesetzt werden. Unter der Rubrik "mindestens" und "höchstens" ist die Konzentration dieser Stoffe - mit Vorzugsbereichen - in Bezug auf die Masse des zu konservierenden Produktes - angegeben.

Besteht das Mittel allein aus einer oder mehreren verschiedenen Aminosäuren so gelten die in Tabelle 1 unter der Rubrik Aminosäuren aufgeführten Konzentrationsangaben.

## Tabelle 1

| Synergist | mindestens | | | höchstens | | | [ ] |
|---|---|---|---|---|---|---|---|
| | I | II | III | IV | V | VI | |
| **Aminosäuren:** | | | | | | | |
| L-Cystein | 10 | 50 | 100 | 5000 | 1000 | 500 | ppm |
| L-Alanin | 10 | 20 | 50 | 1500 | 750 | 150 | " |
| L-Tyrosin | 10 | 20 | 50 | 1500 | 750 | 150 | " |
| Glycin | 10 | 50 | 100 | 5000 | 2500 | 500 | " |
| **Nucleoside oder Nucleotide:** | | | | | | | |
| Inosin | 10 | 25 | 50 | 1000 | 500 | 100 | " |
| 5'-Inosinmono-phosphat | 10 | 50 | 100 | 5000 | 2500 | 500 | " |
| **Komplexbildner:** | | | | | | | |
| EDTA | 0.001 | 0.005 | 0.01 | 1 | 0.5 | 0.1 | % |
| Citrat | 0.001 | 0.005 | 0.01 | 10 | 5 | 1 | % |
| **Phosphate:** | | | | | | | |
| Diphosphat | 0.01 | 0.05 | 0.1 | 5 | 1 | 0.5 | % |
| Triphosphat | 0.01 | 0.05 | 0.1 | 5 | 1 | 0.5 | % |
| Polyphosphat | 0.01 | 0.05 | 0.1 | 5 | 1 | 0.5 | % |
| **Umrötungsmittel:** | | | | | | | |
| Natriumnitrit | 1 | 5 | 10 | 1000 | 500 | 100 | ppm |
| Natriumnitrat | 1 | 5 | 10 | 1000 | 500 | 100 | ppm |
| Kaliumnitrat | 1 | 5 | 10 | 1000 | 500 | 100 | ppm |

I $\triangleq$ Mindestkonzentration

II $\triangleq$ bevorzugte Mindestkonzentration

III $\triangleq$ besonders bevorzugte Mindestkonzentration

IV $\triangleq$ Höchstkonzentration

V $\triangleq$ bevorzugte Höchstkonzentration

VI $\triangleq$ besonders bevorzugte Höchstkonzentration

Sofern zweckmäßig, können diese Mindest- und Höchstkonzentrationen auch unter- bzw. überschritten werden.

Erfindungsgemäß kann das Mittel entweder allein aus einer oder mehreren verschiedenen Aminosäuren oder sowohl aus jeweils nur einem Stoff der jeweiligen Klasse a): Synergist und b): bakterienlysierendes Enzymprodukte mit N-Acetylmuramidaseaktivität zusammengesetzt sein, als auch aus beliebigen Kombinationen z.B. einem, zwei oder mehreren Synergisten und einem, zwei oder mehreren bakterienlysierenden Enzymprodukten mit N-Acetylmuramidaseaktivität. Ebenso kann das Mittel sowohl vor der Anwendung aus den gewünschten Einzelsubstanzen zusammengesetzt werden als auch getrennt nacheinander zugegeben werden, d.h. man versetzt das Produkt, in dem die Sporen desaktiviert werden sollen, zunächst mit dem Synergisten und anschließend mit dem Enzym oder umgekehrt.

Weiterhin kann das erfindungsgemäße Mittel auch in Kombinationen mit physikalischen Konservierungsmethoden, insbesondere thermischen Konservierungsverfahren, wie Pasteurisation oder Sterilisation, angewandt werden. Das Mittel kann sowohl vor als auch nach dem Erhitzungsprozeß zugegeben werden, bevorzugt wird jedoch zumindest das Enzym nach dem Erhitzungsprozeß zugegeben.

In den folgenden Beispielen wird die Erfindung weitergehend erläutert.

In den Ausführungsbeispielen wurden die folgenden Synergisten verwendet:

1: L-Cystein
2. L-Alanin
3. L-Tyrosin
4: Glycin
5. Inosin
6. EDTA
7: Diphosphat
8: Polyphosphat
9: Triphosphat
10: Citrat
11: Natriumnitrit

Beispiel 1

In Vitro Sporenlyse:

Es wurden jeweils 9,9 ml einer wäßrigen Pufferlösung (Acetat oder Trispuffer, je nach gewünschtem pH-Wert), die Cellosyl und Synergist bei den pH-Werten 5, 6 und 7 enthielt, mit 0,1 ml einer Sporensuspension (B.cereus bzw. B.licheniformis), die einen Titer $10^5$ - $10^6$ Sporen/ml Suspension besaß, inkubiert. Auf 10 ml Lösung betrug die Konzentration des Synergisten 1: 100 ppm bzw. 500 ppm;
2: 150 ppm;
2 + 3: jeweils 150 ppm;
4: 500 ppm
5:100 ppm.

Die Konzentration des Cellosyls betrug in allen Fällen 0,1 % bezogen auf 10 ml Lösung.
Jeweils nach einer Inkubationszeit von 24 und 48 Stunden wurde mittels Keimzahlbestimmung die Reduktion der auskeimungsfähigen Sporen bestimmt.
Bei den Proben mit den pH-Werten 5 und 6 betrug in allen Fällen die Sporenreduktion ca. 1 (nach 24 h) bzw. 2 (nach 48 h) log-Phasen (1 log-Phase ≙ 90 %ige Reduktion; 2 log-Phasen ≙ 99 %ige Reduktion).

Beispiel 2

In Vitro Langzeitwirkung

Verzögerung der Sporenauskeimung

49,5 ml Fleischextrakt-Caseinpepton-Bouillon, die Cellosyl sowie die Synergisten 6-11 bei den pH- Werten 5, 6 und 7 (Acetat bzw. Trispuffer) enthielten, wurden mit 0,5 ml einer Sporensuspension (B.cereus, B.licheniformis, Titer $10^5$ - $10^6$ Sporen/ml Suspension) beimpft. Die Cellosylkonzentration - bezogen auf 50 ml Lösung - betrug 0,1 %. Die Synergisten waren in folgenden Konzentrationen in der Lösung vorhanden:

6: 0,1 %

7: 0,5 %

8: 0,5 %

9: 0,5 %

10: 1 %

11: 0,005 %

Nach 7 Tagen erfolgte die Auswertung mittels Keimzahlbestimmung der vegetativen Zellen und mittels Sporentiterbestimmung.

Ergebnis:

Cellosyl bewirkt in Kombination mit den Synergisten 6-11 bei pH 5,0 und teilweise bei pH 6,0 eine Verhinderung der Sporenauskeimung und damit eine Haltbarkeitsverlängerung. Durch die Kombination von 0,1 % Cellosyl mit 50 ppm Natriumnitrit wird die Sporenauskeimung über mindestens 20 Tage hinweg unterbunden, wogegen die alleinige Natriumnitritzugabe die Auskeimung nur über 5 Tage unterbindet. Ohne irgendeine Substanzzugabe keimen die Sporen bereits nach eintägiger Inkubation aus.

Beispiel 3

Lebensmittelversuch - Sporenlyse

10 ml Sterilmilch wurde mit B.cereus Sporen beimpft (Titer ca. $10^3$ Sporen/ml Milch). Nach Zugabe der Synergisten 1-3 (1: 500 ppm; 2: 150 bzw. 500 ppm; 2+3 je 50 ppm), jeweils in Kombination mit 0,1 % Cellosyl wurde die Milch 24 Stunden bei Kühltemperatur (7°C bis 10°) gelagert und anschließend pasteurisiert (75°C, 10 Min.). Anhand von Keimzahlbestimmungen wurde die Reduktion an Endosporen ermittelt. Bei der kombinierten Anwendung von Cellosyl (0,1 %) mit L-Alanin (150 bzw. 500 ppm), L-Cystein (500 ppm) und L-Alanin zusammen mit L-Tyrosin (je 150 ppm) wird der Anteil an Endosporen im Enderzeugnis um 90 % bis 99 % reduziert, wodurch eine Haltbarkeitsverlängerung von 1-2 Tagen erreicht wurde.

Beispiel 4

Lebensmittelversuch - Verzögerung der Sporenauskeimung

Es wurde ein fleischhaltiger Brotaufstrich nach folgender Rezeptur hergestellt:

Margarine        15,6 %

Pflanzenfett (teilgehärtet)        10 %

Natriumcaseinat        4,7 %

Schweinefleisch, gekocht        25,2 %

Wasser        42,8 %

NaCl        1,6 %

Pfeffer        0,1 %

Das Produkt wurde in einer Prozeßanlage hergestellt. Arbeitsablauf:

- Fleisch abkochen

- Fett und Magarine schmelzen

- Kolloidmühle mit heißem Wasser vorwärmen

- heißes Wasser, Casein und Fett voremulgieren

- zerkleinertes Fleisch, Gewürze und Salz zugeben (Verarbeitungstemperatur ca. 40-50°C)

- pH Wert 5,0 bis 6,0 mit Citronensäure einstellen

6

- homogenisieren mittels Kolloidmühle
- Sterilisieren bei 30° bis 116° C

Anschließend wurde der so hergestellte Brotaufstrich mit B.cereus, B.licheniformis und C.sporogenes Sporen kontaminiert (Titer $10^2$/g Brotaufstrich). Nach Zugabe von 0,05 % Cellosyl zusammen mit a) 50 ppm Natriumnitrit und b) 0,1 % Polyphosphat (Angaben beziehen sich auf die Masse des verwendeten Brotaufstrichs) wurden die Produkte bei +10° C gelagert. Die Auswertung erfolgte anhand von Keimzahl- und Sporentiterbestimmungen. Bei der kombinierten Anwendung von Cellosyl mit Natriumnitrit bzw. Cellosyl mit Polyphosphat konnte ein Auskeimen der Endosporen über 14 Tage hinweg unterbunden werden, wogegen in Kontrollchargen bereits nach wenigen Stunden Sporenauskeimung und Anstieg der vegetativen Keimzahlen festgestellt wurde.

## Ansprüche

1. Mittel zur Inaktivierung von Sporen, dadurch gekennzeichnet, daß das Mittel als aktive Komponenten entweder
a) eine oder mehrere verschiedene Aminosäuren oder
b) einen oder mehrere Synergisten zusammen mit einem oder mehreren bakterienlysierenden Enzymprodukten mit N-Acetylmuramidaseaktivität
enthält.

2. Mittel nach Anspruch 1, dadurch gekennzeichnet, daß eine oder mehrere verschiedene proteinogene Aminosäuren verwendet werden.

3. Mittel nach Anspruch 1 oder 2, dadurch gekennzeichnet, daß die Aminosäure(n) ausgewählt wird (werden) aus: Cystein, Alanin, Tyrosin, Glycin.

4. Mittel nach Anspruch 1, dadurch gekennzeichnet, daß der oder die Synergisten ausgewählt werden aus der Gruppe: Aminosäuren, deren Salze, Komplexbildner, Phosphate, Geschmacksverstärker, Umrötungsmittel.

5. Mittel nach Anspruch 1 dadurch gekennzeichnet, daß der oder die Synergisten ausgewählt werden aus der Gruppe: Cystein, Alanin, Tyrosin, Glycin, Inosin, 5´-Inosinmonophosphat, EDTA, Citrat, Diphosphat, Triphosphat, Polyphosphat, Natriumnitrit.

6. Mittel nach Anspruch 1, dadurch gekennzeichnet, daß das oder die bakterienlysierenden Enzymprodukte mit N-Acetylmuramidaseaktivität ausgewählt werden aus der Gruppe pflanzlicher, tierischer oder mikrobiell erzeugter Lysozyme.

7. Mittel nach Anspruch 1, dadurch gekennzeichnet, daß das oder die bakterienlysierenden Enzymprodukte mit N-Acetylmuramidaseaktivität ausgewählt werden aus der Gruppe:
bakterienlysierende Enzymprodukte mit N-Acetylmuramidaseaktivität, aus Streptomyceten.

8. Mittel nach Anspruch 6, dadurch gekennzeichnet, daß das bakterienlysierende Enzymprodukt mit N-Acetylmuramidaseaktivität aus Streptomyces coelicolor DSM 3030 und/oder dessen Mutanten und/oder Varianten stammt (Cellosyl).

9. Verwendung des Mittels gemäß Anspruch 1 als Konservierungsmittel in Produkten, Stoffen oder Erzeugnissen, die durch bakteriellen Sporenbefall verderblich sind.

10. Verfahren zur Verlängerung der Haltbarkeit von Produkten, Stoffen oder Erzeugnissen, die durch bakteriellen Sporenbefall verderblich sind, dadurch gekennzeichnet, daß den Produkten, Stoffen oder Erzeugnissen, die durch bakteriellen Sporenbefall verderblich sind, ein Mittel zur Inaktivierung von Sporen gemäß Anspruch 1 zugegeben wird.

11. Verfahren nach Anspruch 10, dadurch gekennzeichnet, daß das Mittel zur Inaktivierung von Sporen gemäß Anspruch 1 den Produkten, Stoffen oder Erzeugnissen, die durch bakteriellen Sporenbefall verderblich sind, in solch einer Konzentration zugesetzt wird, daß die Aminosäure(n) in einer Konzentration von 10 bis 5000 ppm oder die bakterienlysierenden Enzymprodukte mit N-Acetylmuramidaseaktivität in einer Konzentration von 0,01 bis 1,5 Gew.-% vorliegen, jeweils bezogen auf die Masse des zu konservierenden Produktes.

12. Verfahren zur Herstellung des Mittels gemäß Anspruch 1, dadurch gekennzeichnet, daß entweder die Aminosäure(n) oder der oder die Synergisten und das oder die bakterienlysierenden Enzymprodukte mit N-Acetylmuramidaseaktivität in eine geeignete Applikationsform gebracht werden.

Patentansprüche für folgenden Vertragsstaaten : ES, GR

1. Verfahren zur Verlängerung der Haltbarkeit von Produkten, Stoffen oder Erzeugnissen, die durch bakteriellen Sporenbefall verderblich sind, dadurch gekennzeichnet, daß den Produkten, Stoffen oder Erzeugnissen die durch bakteriellen Sporenbefall verderblich sind, ein Mittel zur Inaktivierung von Sporen, das als aktive Komponenten entweder

a) eine oder mehrere verschiedene Aminosäuren oder

b) einen oder mehrere Synergisten zusammen mit einem oder mehreren bakterienlysierenden Enzymprodukten mit N-Acetylmuramidaseaktivität enthält, zugegeben wird.

2. Verfahren zur Verlängerung der Haltbarkeit von Produkten, Stoffen oder Erzeugnissen, die durch bakteriellen Sporenbefall verderblich sind, dadurch gekennzeichnet, daß die Produkte, Stoffen oder Erzeugnisse, die durch bakteriellen Sporenbefall verderblich sind, zunächst einem thermischen Konservierungsverfahren unterworfen werden und dann mit einem Mittel zur Inaktivierung von Sporen, das als aktive Komponenten entweder

a) eine oder mehrere verschiedene Aminosäuren oder

b) einen oder mehrere Synergisten zusammen mit einem oder mehreren bakterienlysierenden Enzymprodukten mit N-Acetylmuramidaseaktivität enthält, versetzt werden.

3. Verfahren zur Verlängerung der Haltbarkeit von Produkten, Stoffen oder Erzeugnissen, die durch bakteriellen Sporenbefall verderblich sind, dadurch gekennzeichnet, daß die Produkte, Stoffen oder Erzeugnisse, die durch bakteriellen Sporenbefall verderblich sind, zunächst mit einem Mittel zur Inaktivierung von Sporen, das als aktive Komponenten entweder

a) eine oder mehrere verschiedene Aminosäuren oder

b) einen oder mehrere Synergisten zusammen mit einem oder mehreren bakterienlysierenden Enzymprodukten mit N-Acetylmuramidaseaktivität enthält,versetzt werden und dann einem thermischen Konservierungsverfahren unterworfen werden.

4. Verfahren nach Anspruch 1 bis 3, dadurch gekennzeichnet, daß das Mittel zur Inaktivierung von Sporen den produkten, Stoffen oder Erzeugnissen, die durch bakteriellen Sporenbefall verderblich sind, in solch einer Konzentration von 10 bis 5000 ppm oder die bakterienlysierenden Enzymprodukte mit N-Acetylmuramidaseaktivität in einer Konzentration von 0,01 bis 1,5 Gew.-% vorliegen, jeweils bezogen auf die Masse des zu konservierenden Produktes.

5. Verfahren nach einem der Ansprüche I bis 3, dadurch gekennzeichnet, daß die Produkte, Stoffe oder Erzeugnisse, die durch bakteriellen Sporenbefall verderblich sind, Lebensmittel, kosmetische oder pharmazeutische Produkte, Tabak oder Tabakerzeugnisse oder Futtermittel sind.

6. Verfahren zur Herstellung des Mittels, das als aktive Komponenten entweder

a) eine oder mehrere verschiedene Aminosäuren oder

b) einen oder mehrere Synergisten zusammen mit einem oder mehreren bakterienlysierenden Enzymprodukten mit N-Acetylmuramidaseaktivität enthält,

dadurch gekennzeichnet, daß entweder die Aminosäure(n) oder der oder die Synergisten und das oder die bakterienlysierenden Enzymprodukten mit N-Acetylmuramidaseaktivität in eine geeignete Applikationsform gebracht werden.